# EUROPEAN PATENT APPLICATION

(11) **EP 3 064 105 A1**
(43) Date of publication of application: **07.09.2016**
(21) Application number: 16157184.9
(22) Date of filing: 24.02.2016
(51) Int. Cl.: A47J 37/04

(54) **COOKING SYSTEM**

(30) Priority: 03.03.2015 IT MO20150004 U
(71) Applicant: Zingaro, Matteo, 38045 Civezzano (TN) (IT)
(72) Inventor: Zingaro, Matteo, 38045 Civezzano (TN) (IT)
(74) Representative: Crugnola, Pietro

(57) **Abstract**

A cooking system (1), suitable for cooking food preparations, comprises a roasting apparatus (2). The roasting apparatus (2) comprises a movable member (3) and a supporting member (4), which is arranged for supporting said movable member (3) and enabling said movable member (3) to rotate in relation to said supporting member (4). The movable member comprises a hinged portion (5) and a cooking portion (6), said cooking portion (6) being so shaped as to surround said hinged portion (5). The cooking system (1) can further comprise a supporting element (17; 117), which is usable as a base for said roasting apparatus (2), and/or a covering apparatus (23), which is made in the form of a kiosk or gazebo and is usable to protect said roasting apparatus (2) from sunlight and/or atmospheric agents.

## Description

The present invention relates to a cooking system, which can be used for cooking food preparations and products by roasting.

In the field of the gastronomy, the so-called *"arrosticino",* or ovine meat skewer, which is a food preparation that is typical of the cuisine of Abruzzo, is well known and appreciated.

The ovine meat skewer is prepared by cutting the meat into small portions and placing the latter on a pointed wooden or metal rod, i.e. a small spit, having a variable length (e.g. 15-20 centimetres). The portions of meat can be approximately cubic (with side length of about 1.50 centimetres), or have a more irregular shape. Once prepared, the ovine meat skewer is cooked (roasted) manually on embers, usually by using a roasting apparatus - the so-called brazier - which is shaped in the form of a long and narrow pan and on the bottom of which the embers are placed. The opposite ends of the rod of the ovine meat skewer are placed on opposite edges of the brazier, so as to expose the meat to the heat emitted by the embers, which are positioned on the bottom of the brazier. The greater the length of the brazier, the greater the number of skewers that can be simultaneously placed on the brazier and roasted. During cooking, the ovine meat skewer has to be rotated several times so as to expose each of the four sides of the portions of meat to the heat for a suitable time, i.e. about 2 minutes. Therefore, the time required for cooking a ovine meat skewer in optimum manner is about 8 minutes.

In addition to the braziers disclosed above, other roasting apparatuses are known that have the shape of an elongated pan, in which the heat necessary for cooking the skewers is produced electrically (by the use of electrical resistances) or by combustion of gas. Roasting apparatuses are also known that are provided with a mixed supply, in which the heat can be produced alternatively by embers, electrical resistances or combustion of gas.

The known braziers and other roasting apparatuses are further used for cooking skewers that are prepared with food products that are different from ovine meat, for example vegetables, fish, swine or bovine meat.

A drawback of the roasting apparatuses disclosed above consists of the fact that if it is desired to prepare simultaneously more than one ovine meat skewer, an assigned operator (for example a cook) is forced to move frequently along the roasting apparatus to rotate all the skewers one after the other and thus expose the meat to the heat in a suitable manner.

As each side of each portion of meat has to be exposed to heat for no longer than 2 minutes, the greater the number of skewers to be roasted simultaneously, the more frequently, as well as faster, the operator will have to move along the roasting apparatus.

Consequently, and in particular in the field of professional catering, cooking ovine meat skewers is a substantially tiring and inconvenient procedure.

More in general, even if it is not necessary to comply with particularly short cooking times (like, for example, the time required for cooking ovine meat skewers), the use of known roasting apparatuses for cooking food preparations on skewers - for example based on bovine or swine meat or fish - is substantially inconvenient. In fact, the operator is always forced to move along the roasting apparatus, and thus to change position frequently, in order to rotate all the skewers exposed to the heat emitted by the embers (or by the electrical resistance, or by the flame) and cook all the sides of the skewer in optimum, i.e. uniform, manner.

Another drawback of the known roasting apparatuses consists of the elongated shape of the latter. As disclosed previously, the greater the number of skewers that it is desired to cook simultaneously, the more the roasting apparatus has to extend in length. Thus, in particular in the field of professional catering, roasting apparatuses are preferred that are substantially extended in length. The latter are nevertheless bulky in use and inconvenient to clean and put away after use.

An object of the invention is to improve known roasting apparatuses for cooking food products and preparations on skewers.

Another object is to improve known roasting apparatuses for cooking ovine meat skewers.

A further object is to make available a roasting apparatus for cooking skewers in a manner that is substantially comfortable and not tiring for the operator.

Still another object is to make available a roasting apparatus for cooking skewers that is substantially not bulky in use and convenient to clean and put away after use.

According to the invention, a cooking system is provided, as defined in claim 1.

Owing to the invention, a cooking system is made available through which it is possible to cook simultaneously numerous skewers (for example, ovine, swine and/or bovine meat skewers or fish- and/or vegetable-based skewers or skewers that are based on other food product that is suitable for being roasted) in a manner that is substantially comfortable and not tiring for the operator. In fact, owing to the roasting apparatus compriesed in the cooking system according to the invention, the operator is no longer forced to move along the brazier to rotate the skewers one after another and thus to expose the skewers to the heat in an optimum manner.

Further, the roasting apparatus comprised in the cooking system according to the invention is shaped in such a manner as not to result bulky in use and to be convenient to clean and put away after use.

The features of the cooking system according to the invention can be better understood and implemented with reference to the attached drawings that illustrate an embodiment thereof by way of non-limiting example in which:
Figure 1 is a perspective top view showing a roasting apparatus comprised in the cooking system according to the invention;
Figure 2 is a top plan view of the roasting apparatus of Figure 1;
Figure 3 is a side view of the roasting apparatus of Figure 1;
Figure 4 is a section of the roasting apparatus of Figure 1 taken along the section plane IV-IV shown in Figure 2;
Figure 5 is a bottom perspective view of a movable member comprised in the roasting apparatus of Figure 1;
Figure 6 is a top perspective view of a supporting member comprised in the roasting apparatus of Figure 1;
Figure 7 is a top perspective view of a supporting element, which is usable in combination with the roasting apparatus shown in Figures 1 to 6;
Figure 8 is a top perspective view of a covering apparatus, which is usable in combination with the roasting apparatus shown in Figures 1 to 6 and with the supporting element of Figure 7;
Figure 9 is a side view of the covering apparatus of Figure 8;
Figure 10 is a bottom plan view of the covering apparatus of Figure 8;
Figure 11 is a top plan view of the covering apparatus of Figure 8;
Figure 12 is a perspective, fragmentary and incomplete view showing a cooking system according to the invention, comprising the roasting apparatus of Figures 1 to 6, an embodiment of the supporting element of Figure 7 and the covering apparatus of Figures 8 to 11.

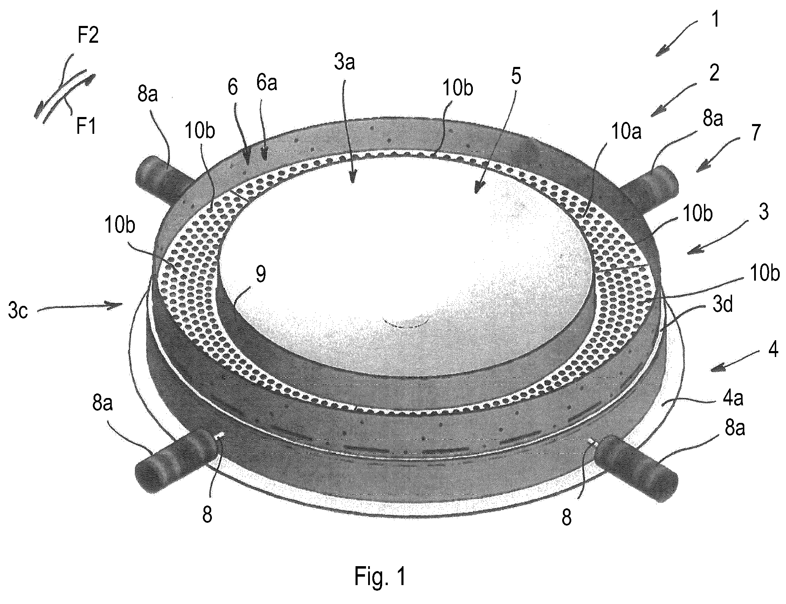

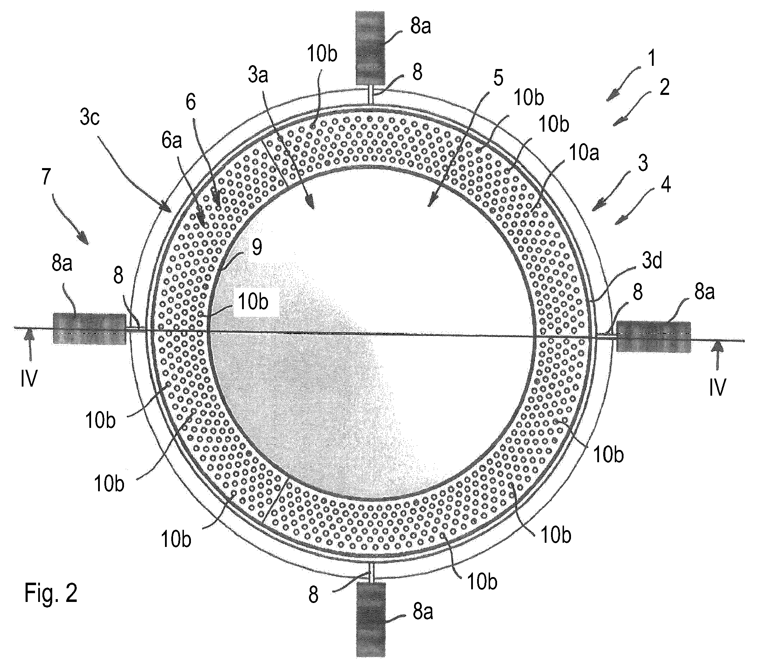

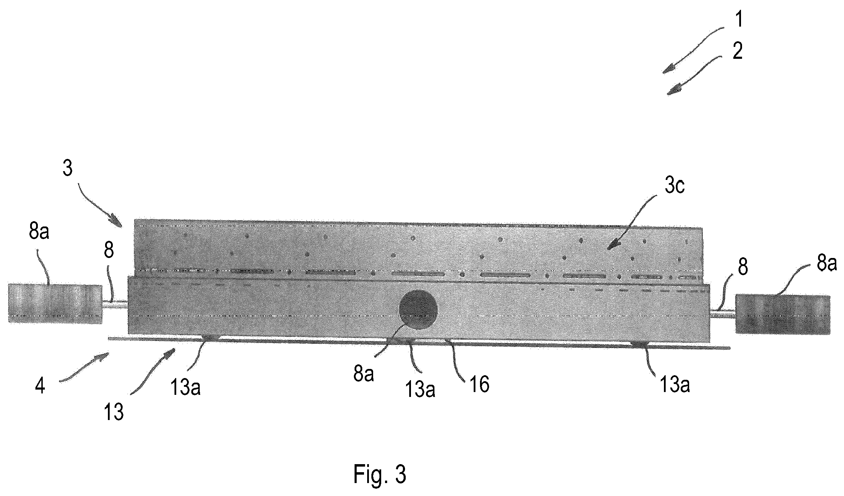

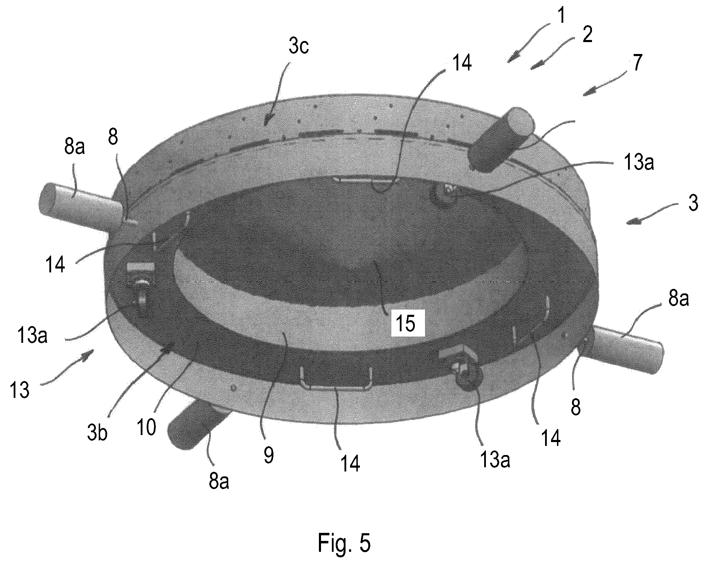

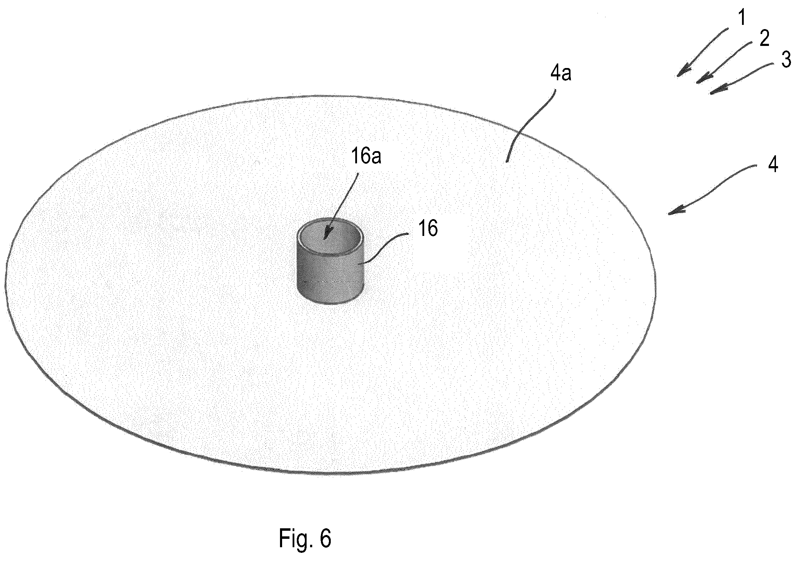

Figures 1, 2, 3, 4, 5, 6 and 12 show a cooking system 1 according to the invention, comprising a roasting apparatus 2, made (for example) of food grade stainless steel, or of another suitable material that is wearproof and can be easily sanitized.

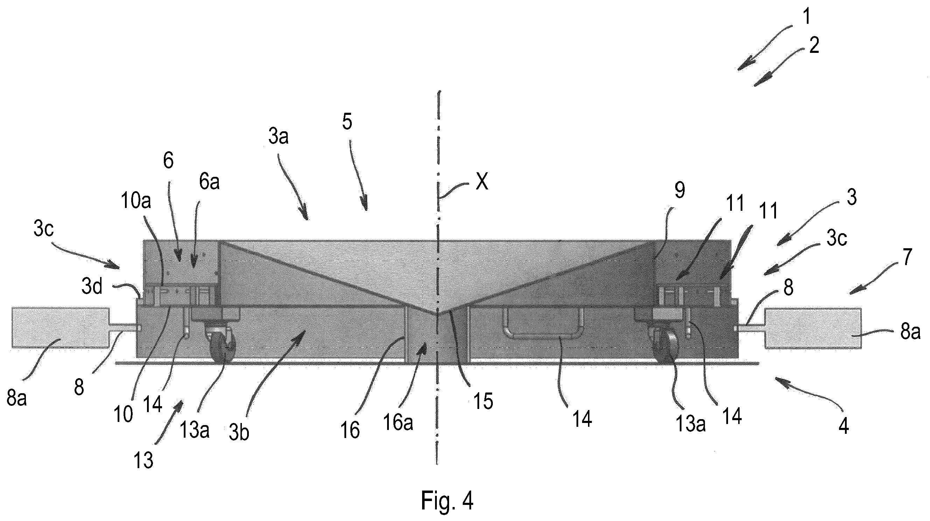

The roasting apparatus 2 comprises a movable member 3 and a supporting member 4, which are shaped in such a manner as to enable the movable member 3 to be fitted on the supporting member 4 (underneath) and to be rotated in relation to the latter. More exactly, the movable member 3 can rotate around a longitudinal axis X (shown in Figure 4) of the roasting apparatus 2.

The movable member 3 is substantially cylindrical- or frustoconical-shaped, so as to have a circular plan shape, and comprises an operating face 3a, a resting face 3b and a side face 3c. The operating face 3a and the resting face 3b are opposite one another, whilst the side face 3c is arranged transversely to the first two. In an approximately median portion of the side face 3c a shoulder 3d is made. In an embodiment that is not shown, the side face 3c is devoid of the shoulder 3d.

In use, namely when the movable member 3 rests on the supporting member 4 underneath, the resting face 3b faces in the direction of the supporting member 4 and thus corresponds to the lower face of the movable member 3, whilst the operating face 3a faces in the direction opposite the supporting member 4 and thus corresponds to the upper face of the movable member 3.

In embodiments that are not shown, the movable member 3 has a polygonal rather than circular plan shape, and with a more or less high number of sides. For example, the movable member 3 can have a hexagonal, decagonal or dodecagonal plan shape. Consequently, in these embodiments that are not shown, the movable member 3 is substantially prism- or prism frustum-shaped.

The movable member 3 is provided with controlling means 7, arranged for enabling an operator (who is not shown) to move in a controlled manner - and more exactly rotate clockwise or anticlockwise - the movable member 3 in relation to the supporting member 4 underneath. The controlling means 7 comprises a plurality of shafts 8, each of which is provided with a knob 8a. The shafts 8 are rod-shaped and are fixed to the side face 3c.

More exactly, the shafts 8 protrude from a zone of the latter comprised between the shoulder 3d and the resting face 3b. The knobs 8a are cylindrical and made of a suitable material, for example of wood or other thermally insulating material. In one embodiment that is not shown, the knobs can be non-cylindrical, for example spherical. In the embodiment shown in the Figures, the controlling means 7 comprises four shafts 8, which are fixed to the side face 3c so as to be reciprocally staggered by 90°. In an embodiment that is not shown, the number of shafts can be less or more than four. In another embodiment that is not shown, the controlling means 7 comprises a plurality of handles that are C or U-shaped and are inserted on the side face 3c.

In the operating face 3a of the movable member 3 a hinged portion 5 and a cooking portion 6 are defined.

The cooking portion 6 is so shaped as to surround the hinged portion 5 and, more exactly (as shown in Figures 1, 2 and 5), the cooking portion 6 has an annular shape and surrounds completely the hinged portion 5, having circular shape and a smaller diameter than that of the movable member 3. In the previously mentioned embodiments that are not shown, in which the movable member 3 has a polygonal (rather than circular) plan shape, the cooking portion 6 and the hinged portion 5 have a polygonal plan shape.

The cooking portion 6 comprises a heat producing zone 6a, which is defined overall by the side face 3c, by a separating wall 9 and by a bottom 10. The separating wall 9 is interposed between the cooking portion 6 and the hinged portion 5 and is parallel to the side face 3c, whilst the bottom 10 is arranged transversely to the side face 3c and to the separating wall 9. The heat producing zone 6a thus opens in a direction opposite the supporting member 4, namely superiorly (when the roasting apparatus 2 is in use). The heat producing zone 6a is arranged for housing heat producing means (that are of known type and are not shown), arranged for generating the heat necessary for cooking food preparations, in particular skewers. The heat producing means comprises embers, for example wood embers or charcoal embers.

The heat producing zone 6a is further arranged for supporting the food preparations during cooking. In use, each skewer can be positioned stably near the heat producing zone 6a, by resting the opposite ends (of the wooden or metal rod) of the skewer on corresponding edge zones of the separating wall 9 and of the side face 3c. This is possible inasmuch as the distance between these edge zones is less than the average length of a skewer, i.e. is equal to about 11 centimetres.

In this manner, each skewer is suitable exposed to the heat produced inside the heat producing zone 6a during cooking (roasting).

In the embodiment of roasting apparatus 2 shown in the Figures, in the heat producing zone 6a a supporting plate 10a is installed, in which a plurality of holes 10b is made. The supporting plate 10a is shapingly coupled with the cooking portion 6 and is thus of annular shape. In the previously mentioned embodiments that are not shown, in which the movable member 3 has a polygonal (rather than circular) plan shape, the plan shape of the supporting plate 10a is polygonal.

The supporting plate 10a is positioned near the bottom 10 and is spaced apart from the latter by a plurality of spacer elements 11. Each spacer element is shaped in the form of a small bar, which protrudes from the bottom 10 in an opposite direction to the supporting member 4 and is interposed between the bottom 10 and the supporting plate 10a.

The supporting plate 10a is arranged for receiving the heat producing means, for example embers, from which the heat is emitted that is necessary for cooking the skewers. The plurality of holes 10b enables air to pass through and thus better combustion of the embers to be obtained.

Embodiments (that are not shown) of the roasting apparatus 2 are further provided in which the cooking heat is not produced by the embers and the heat producing means comprises known devices, supplied with electric energy or combustible gases.

In an embodiment that is not shown, the supporting plate 10a is replaced by an electrical resistance of known type, for example an electric coil.

In another embodiment that is not shown, the electrical resistance is fixed to the supporting plate 10a.

In a further embodiment that is not shown, the supporting plate is supplied electrically and thus acts as a heating element (hotplate). In the embodiments that use electric energy, on the bottom of the heat producing zone 6a a vessel is housed containing (in use) water, which is intended to collect the fat that melts during cooking.

In another further embodiment that is not shown, the supporting plate 10a is replaced by a ring-shaped conduit, from which a plurality of small burners (of known type) leads that are supplied via the conduit with a combustible gas (for example propane, butane or methane).

In a further other embodiment that is not shown, the circular conduit and the burners are positioned between the bottom of the heat producing zone and the supporting plate.

In a still further embodiment that is not shown, the cooking heat can be produced alternatively with embers, electric energy or gas. Thus, in this embodiment, in the heat producing zone 6a the supporting plate 10a and the electric coil - or the electrically supplied supporting plate - and the conduit with the burners are installed simultaneously.

The hinged portion 5 is substantially shaped in the form of a conical depression, the bottom of which (apex of the cone) is inserted, in use, inside a part of the supporting member 4. At the bottom of the hinged portion 5 the longitudinal axis X of the roasting apparatus 2 passes (Figure 4).

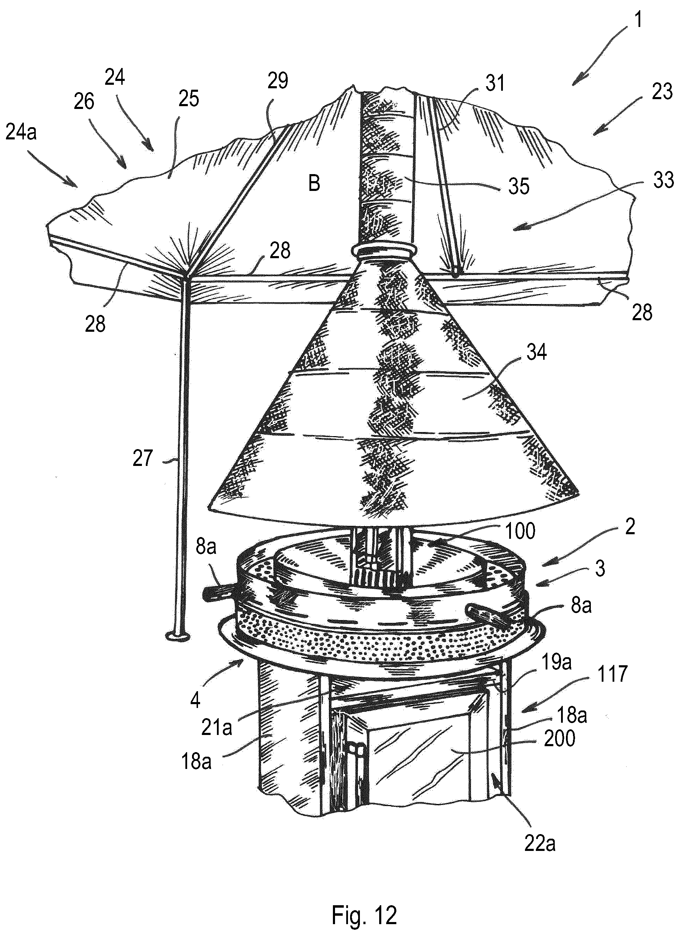

The hinged portion 5 is separated from the adjacent cooking portion 6 by the separating wall 9. In the roasting apparatus 2 embodiment shown in the Figures, the hinged portion 5 is used to prepare the embers. In particular, a device of known type can be used, for example a so-called "chimney starter" 100 (shown in Figure 12). The latter can be placed in the conical depression of the hinged portion 5 and be left in this position during preparation of the embers (which occurs inside the chimney starter, according to a procedure that is known to those skilled in the art). When the embers are ready, the chimney starter 100 is grasped by the operator and upturned above the hinged portion 5, so as to discharge the embers inside the latter. After removing the chimney starter 100 from the hinged portion 5, the operator, through the use of a suitable tool (for example, a shovel), displaces the embers inside the heat producing zone 6a and then onto the supporting plate 10a.

The resting face 3b of the movable member 3 comprises moving means 13, arranged in a peripheral zone of the resting face 3b (corresponding to the cooking portion 6 of the operating face 3a) and comprising a plurality of wheels 13a. The latter are of known type and can be, for example, swivelling wheels, namely wheels rotating around both a horizontal axis and a vertical axis. The wheels 13a are mounted on the bottom 10b and, in use (namely when the movable member 3 rests on the supporting member 4 underneath), face the supporting member 4. The moving means 13 enables the movable member 3 to move (rotate) on the supporting member 4 underneath.

In the embodiment shown in the Figures, the movable member 3 is provided with three wheels 13a, which are arranged so as to be reciprocally staggered by 120°. In embodiments that are not shown, the movable member 3 can be provided with a greater number of wheels than three.

The resting face 3b further comprises a plurality of handles 14, which are approximately U-shaped and protrude from a peripheral zone of the resting face 3b (corresponding to the cooking portion 6 of the operating face 3a). The handles 14 are usable for handling the movable member 3 more easily, for example when the latter has to be cleaned or transported.

In the embodiment shown in the Figures, the movable member 3 is provided with three handles 14, reciprocally staggered by 120° and interposed between the three wheels 13a. In embodiments that are not shown, the movable member 3 can be provided with a number of handles that is greater or less than three.

The central zone of the resting face 3b corresponds to the hinged portion 5 of the operating face 3a and comprises a pivot portion 15. The pivot portion 15 is conical and comprises the bottom of the conical depression forming the hinged portion 5. Between the central zone and the peripheral zone of the resting face 3b the separating wall 9 is interposed.

In the embodiment shown in the Figures, the movable member 3 has a diameter of about 120 centimetres and the cooking portion 6 can house up to about 180 skewers simultaneously.

In embodiments that are not shown, the diameter of the movable member 3 can be greater or less than 120 centimetres.

The supporting member 4 is disc-shaped and comprises an operating face 4a and a resting face (that is not shown). In use, the operating face 4a faces the resting face 3b of the movable element 3 and the resting face lies on a surface underneath. In a central zone of the operating face 4a a seat 16 is fixed that is shaped as a hollow cylinder. When the movable member 3 is applied to the supporting member 4, the pivot portion 15 is received in a cavity 16a of the seat 16 (Figure 4). In this manner, the movable member 3 can rotate around the longitudinal axis X on the supporting member 4 underneath, according to one or the other of two opposite directions (i.e. clockwise or anticlockwise), indicated in Figure 1 by the arrows F1 and F2. When the movable member 3 rotates in relation to the supporting member 4, the wheels 13a rotate on the operating face 4a of the supporting element 4.

In embodiments that are not shown, the seat 16 and/or the pivot portion 15 can be made differently from what has been disclosed above. For example, the conical bottom of the hinged portion can be provided with a cylindrical extension, shapingly coupled with the cavity of the seat. Alternatively, the cavity of the seat can be shapingly coupled with the pivot portion, i.e. be conical.

In the embodiment shown in the Figures, the movable member 3 can be moved manually by the operator. The latter, by acting on the controlling means 7 - i.e. by grasping the shafts 8 - can rotate the movable member 3 according to the direction F1, or F2.

In an embodiment that is not shown, the movable member 3 is rotated by actuating means, for example by an electric motor (of known type), controlled directly by the operator. The electric motor can be a step motor, which enables the movable member 3 to be rotated according to an angle of preset size.

In another embodiment that is not shown, the movable member 3 is rotated by actuating means and is controlled automatically, for example by a timing device that drives the motor (for example, a step motor) at preset intervals of time.

Owing to the fact that the movable member 3 can rotate in relation to the supporting member 4, the roasting apparatus 2 enables a plurality of skewers (for example, ovine, swine and/or bovine meat skewers or fish- and/or vegetable-based skewers or skewers that are based on other food product that is suitable for being roasted) to be cooked in a manner that is substantially comfortable and not tiring for the operator.

In fact, in use, after the skewers have been positioned in the cooking portion 6, in such a manner as to be suitably exposed to the cooking heat (produced by embers, electrical resistance or gas combustion), the operator is no longer forced to move along the roasting apparatus to rotate one after the other all the skewers and thus expose the meat to the heat in a suitable manner. In fact, the operator can remain stationary in a preset position, rotate the movable member 3 so as to bring near himself / herself in a suitable manner the various skewers, one after the other, and rotate the latter.

In particular, the roasting apparatus 2 facilitates the operator when the latter has to cook the skewers directly in front of spectators (for example, the customers of a restaurant that uses the cooking system according to the invention). In fact, if the flame of the embers rises suddenly - for example because of the fat that typically runs from ovine meat skewers during roasting - in a zone of the cooking portion 6 far from the operator, the operator simply rotates the movable member 3 so as to bring near himself / herself the zone of the cooking portion 6 in which the flame has risen, so as to intervene on the flame without having to move and avoid possible risks for the spectators.

Owing to the invention, the operator is thus able to control the cooking of each skewer without changing position. Even if it is not necessary to comply with particularly short cooking times (as for example those required for cooking ovine meat skewers), the use of the roasting apparatus 2 avoids the need for the operator to move along the roasting apparatus to rotate all the skewers exposed to the heat. As pointed out above, the operator can remain stationary in a preset position, rotate the movable member 3 and bring near himself / herself, one after another, the various skewers (or other food preparations cooked by the roasting apparatus 2).

Further, compared with the known roasting apparatuses, the roasting apparatus 2 is substantially not bulky, in use, and is convenient to clean and put away after use. This is made possible by the cylindrical or prismatic shape of the movable member 3 and by the resulting annular or polygonal plan shape of the cooking portion 6, which enable a high number of skewers to be cooked simultaneously. In this manner, it is no longer necessary to extend the cooking zone in a longitudinal direction, as on the contrary it occurs in the known roasting apparatuses, which have the shape of a long and narrow pan.

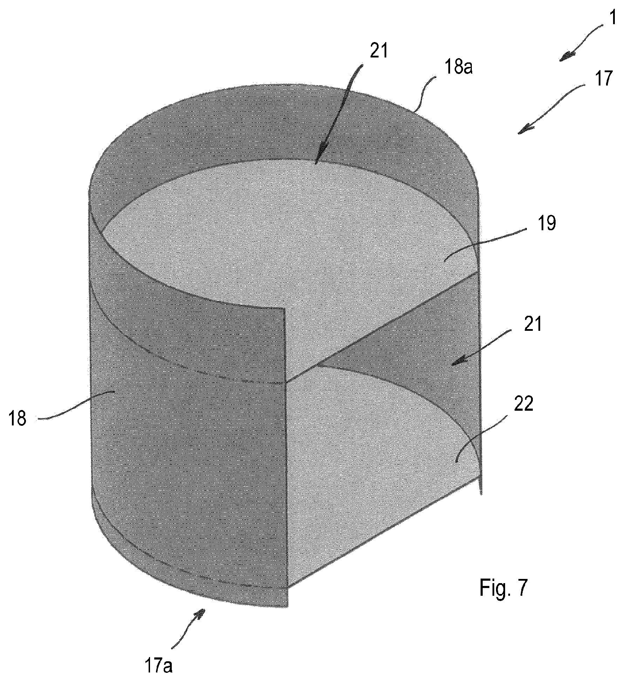

The cooking system 1 according to the invention can comprise a supporting element 17, shown in Figure 7, which is made (for example) of food grade stainless steel, or of another suitable material that is wearproof and can be easily sanitized. The supporting element 17 can be used in combination with the roasting apparatus 2, as a base or stand for the latter. Further, the supporting element 17 can house internally kitchen utensils and/or a small refrigerator in which to store the products to be cooked, for example raw skewers.

The supporting element 17 has a C-shaped cross section and is thus shaped approximately as an incomplete cylinder, comprising a side wall 18, a first shelf 19 and a second shelf 20.

The first shelf 19 is arranged transversely to the side wall 18 near a supporting edge 18a of the latter. In use, the resting face of the supporting member 4 can be positioned on the supporting edge 18a. In this manner, between the first shelf 19, the side wall 18 and the supporting member 4 a first compartment 21 is defined, which is suitable for receiving kitchen utensils and/or other objects of small dimensions (that are not shown). The second shelf 20 is arranged transversely to the side wall 18 near a base 17a of the supporting element 17 and defines, together with the side wall 18 and the first shelf 19, a second compartment 22. The latter, being of dimensions that are significantly greater than the first compartment 21, can house objects of medium dimensions, like a small refrigerator (which is not shown in Figure 7).

An alternative embodiment of the supporting element 17 is shown in Figure 12, in which a supporting element 117 is visible. The latter differs from the supporting element 17 only in shape, being parallelpipedon- or cube-shaped. The supporting element 117 comprises three side walls 18a (of which only two are visible in Figure 12), a first shelf 19a and a second shelf (which is not shown). In the supporting element 117 a first compartment 21a and a second compartment 22a are defined. The latter is sufficiently spacious as to be able to house a small refrigerator 200.

It should be noted that the supporting element 17, 117 can be comprised in the cooking system 1 in combination with the roasting apparatus 2, but is not an indispensable component of the cooking system 1.

In fact, the roasting apparatus 2 can be placed, in use, on a plurality of elements of known type, which are equally suitable for acting as a support. For example, it is possible to place the roasting apparatus 2 above a metal or natural stone table or stand, or on a granite, marble or brick base. It is further possible to place the roasting apparatus 2 on a movable base, for example a cart of known type like those used for barbecues.

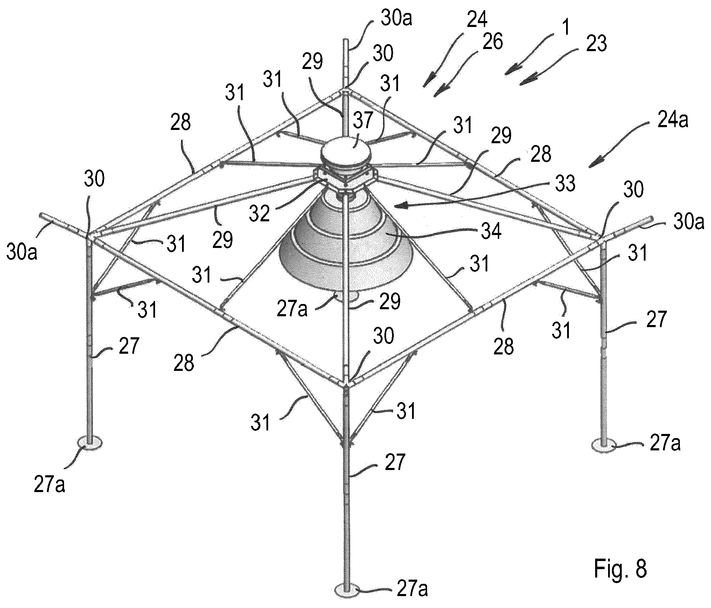

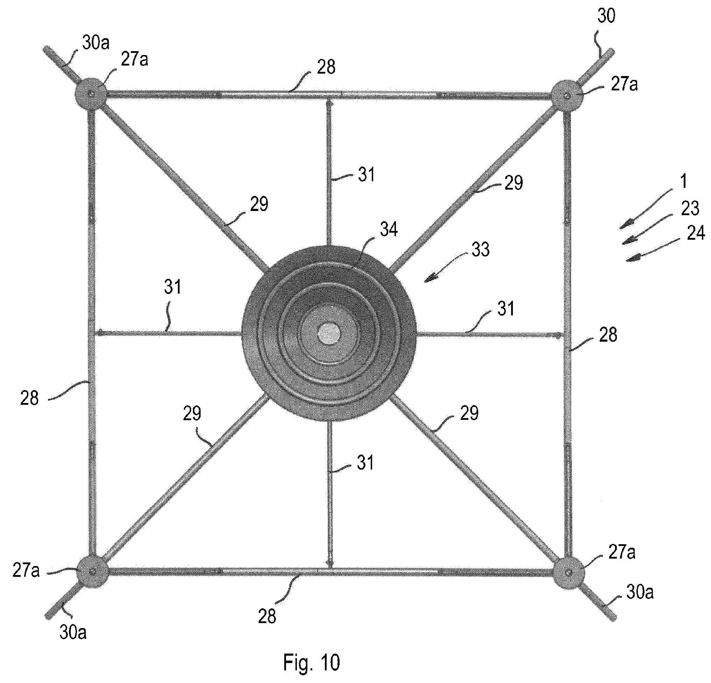

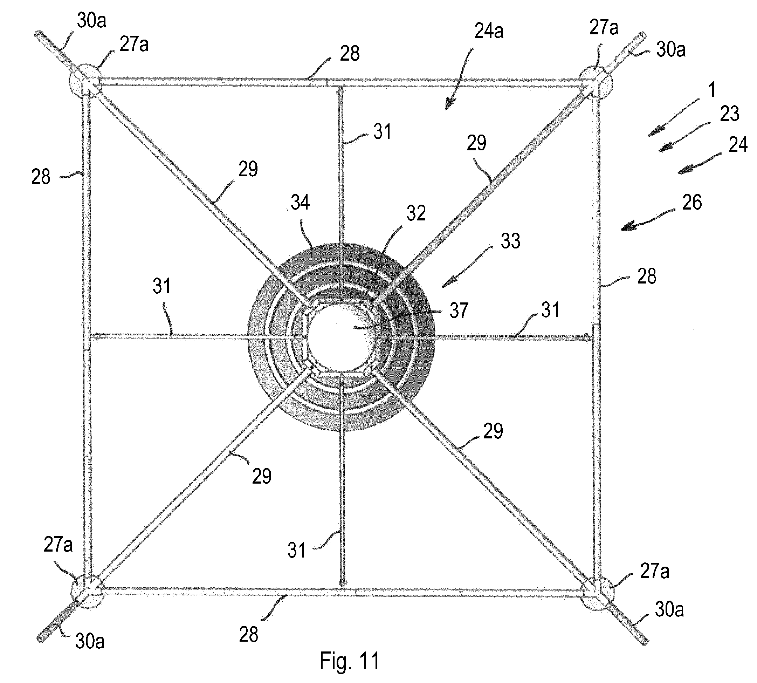

The cooking system 1 according to the invention can comprise a covering apparatus 23, shown in Figures 8 to 11. The covering apparatus is made in the form of kiosk or gazebo, which is assemblable at the time of use, and comprises a supporting frame 24 and a covering cloth 25 (shown in Figure 12). The supporting frame 24 is obtained by assembling reciprocally a plurality of tubular elements 26 and of multiple tubular connections 30, for example made of steel or another suitable material. The tubular elements 26 and the multiple tubular connections 30 are fixed reciprocally by mechanical fixing means of known type (for example bolts, bayonet fittings or snap fittings). The multiple tubular connections 30 are provided with tubular extensions 30a, arranged for supporting corresponding angles of the covering cloth 25. In an embodiment that is not shown, the multiple tubular connections are devoid of tubular extensions.

The tubular elements 26 are assembled reciprocally for forming, in the supporting frame 24, a plurality of uprights 27, a plurality of crosspieces 28 and a plurality of tilted bars 29.

As shown in Figure 8, when the supporting frame 24 is assembled the uprights 27 are arranged vertically and support the crosspieces 28 (arranged horizontally) and the tilted bars 29 (arranged obliquely) that overall define a roof portion 24a, i.e. the upper part (in use) of the covering apparatus 23. In order to enable the uprights 27 to rest stably on a portion of ground or floor (that is not shown) on which the covering apparatus 23 is installed, each upright is provided with a disc-shaped base 27a. The supporting frame 24 further comprises a plurality of reinforcing bars 31, which are interposed between the uprights 27, the crosspieces 28 and the tilted bars 29 in order to reinforce the structure of the supporting frame 24. The reinforcing bars 31 are maintained in position by mechanical fixing means of known type, for example bolts.

In an embodiment that is not shown, the uprights are provided with wheels and the latter are fixed to the base of each upright.

At the top of the roof portion 24a a supporting portion 32 is mounted, which is arranged for supporting sucking means 33, comprising a hood 34, a conduit 35, a chimney portion 36 and a protecting dome 37. The sucking means 33 is arranged for sucking, possibly filtering and dispersing into the ambient air the smoke produced during cooking.

The supporting portion 32 is shaped approximately as a perforated quadrilateral and is supported by the tilted bars 29 and the reinforcing bars 31. To the supporting portion 32 the chimney portion 36 is fixed, which protrudes from the roof portion 24a in a direction opposite the uprights 27 (i.e. upwards, in use) and is in turn topped by the protecting dome 37. To the supporting portion 32 the conduit 35 is further fixed, which protrudes in a direction opposite the chimney portion 36 (i.e. downwards, in use). The conduit 35 traverses the supporting portion 32, supports the hood 34 and connects the latter to the chimney portion 36.

The hood 34 is substantially cone-shaped, having the base facing in the opposite direction to the roof portion 24a (i.e. facing downwards, in use). The hood 34 can be of sucking or of sucking and filtering type.

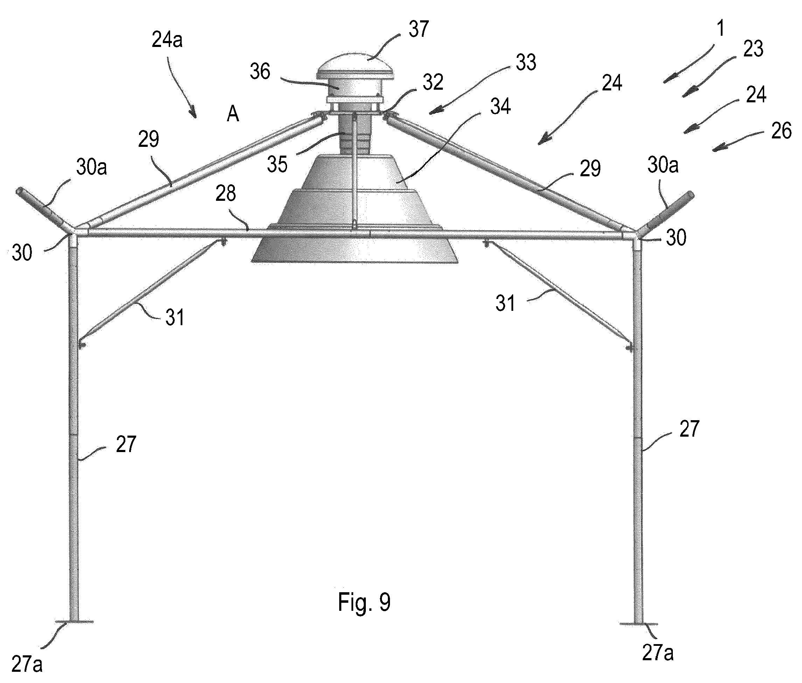

The conduit 35 is telescopic and, when the roasting apparatus 2 is not in use, is maintained in a rest configuration A (Figure 9), namely it is completely retracted. The telescopic conduit 35 is placed in an extended configuration B (Figure 12), namely it is completely extended, before the cooking starts. In use, the conduit 35 can be alternatively placed in the work configuration B or in the rest configuration A manually, respectively by grasping and moving the hood 34 in a direction opposite the roof portion 24a (i.e. downwards) or by grasping and moving the hood 34 to the roof portion 24a (i.e. upwards). In an embodiment that is not shown, the conduit 35 is not telescopic and is of a length that is such as to maintain the hood 34 constantly near the roasting apparatus 2.

The chimney portion 36 is approximately shaped as a hollow cylinder and is arranged for housing a motor, a fan and possible filters that are necessary for the operation of the hood 34. The motor, fan and possible filters are of known type and are not shown. The motor can be an electric motor, having (for example) 120 watt power. The chimney portion 36 further enables the smoke produced during cooking to be dispersed into the ambient air. The protecting dome 37 (mounted above the chimney portion 36) enables the smoke to exit the chimney portion 36 and simultaneously prevents foreign bodies (rain, snow, birds or something else) from penetrating inside of the chimney portion 36, the conduit 35 and the hood 34.

The covering cloth 25 is a cloth of known type and is arranged for protecting the roasting apparatus 2 and the assigned operators from atmospheric agents and from sunlight. It can be made of known materials such as, for example, cotton, hemp or polyester. In an embodiment that is not shown, the covering cloth is made of polyester covered with shading PVC, namely suitable for blocking solar radiation and reducing the temperature (inside the covering apparatus) during hot weather. In another embodiment that is not shown, the covering cloth is made of a fireproof, i.e. self-extinguishing material.

In use, the covering apparatus 24 is assembled - for example on a level meadow or in a garden - and the roasting apparatus 2 is positioned near the hood 34. Before starting cooking, the operator can take the conduit 35 manually from the rest configuration A to the work configuration B, so as to bring the hood 34 near the roasting apparatus 2. When the hood 34 is positioned above the roasting apparatus 2, the operator can start to work, for example (when the roasting apparatus 2 uses heat produced by the embers) by preparing the embers with the chimney starter 100 positioned in the hinged portion 5. Once completed the cooking of the food preparations (for example, ovine, swine and/or bovine meat skewers or fish- and/or vegetable-based skewers or skewers that are based on other food product that is suitable for being roasted), the operator can take the conduit 35 manually from the work configuration B to the rest configuration A, so as to remove the hood 35 from the roasting apparatus 2.

The covering apparatus 23 shown in the Figures, once it is assembled and complete with covering cloth 25, has a square plan shape, is about 3.40 metres high and has a side that is about 5 metres long. In embodiments that are not shown, the plan shape can be different, for example rectangular, and the dimensions (height and length of the sides) can be greater or less than those mentioned above.

The covering apparatus 23 is usable not only when it is desired to use the roasting apparatus 2 in the open, but also in a closed environment.

For example, on the occasion of exhibitions of the agricultural and food and/or catering areas, it is possible to set up (in a pavilion of the fair) a gastronomic stand for tasting food preparations that are roasted by using the cooking system 1, including the roasting apparatus 2, the supporting element 17 (or 117) and the covering apparatus 23. In fact, owing to the sucking means 33 of the latter, it is possible to roast products and food preparations in a closed environment, avoiding to spread in the (closed) environment a smoke that is annoying and potentially harmful for operators and for visitors. Further, the covering apparatus 23 can be customised, for example by making a covering cloth 25 that is coloured and/or bears advertising messages, or by attaching informative, advertising and/or decorative placards to the supporting frame 24.

As previously emphasised with regard to the supporting element 17 (or 117), also the covering apparatus 23 can be comprised in the cooking system 1, in combination with the roasting apparatus 2, but is not an indispensable component of the cooking system 1.

In fact, it is possible to use the roasting apparatus 2 in the open without covers, or by positioning the roasting apparatus 2 under covering structures of known type, that are open on the sides and are thus suitable for enabling smoke to disperse, such as for example canopies, pergolas, kiosks, marquees and gazebos.

Further, it is possible to use the roasting apparatus 2 alone - and thus without the sucking means 33 of the covering apparatus 23 - even in a closed environment. This can be obtained by positioning the roasting apparatus 2 below a kitchen hood of known type such as, for example, a kitchen hood for professional catering.

In Figure 12 a cooking system 1 is shown comprising all the previously disclosed components, i.e. the roasting apparatus 2, the supporting element 117 and the covering apparatus 23. The cooking system 1 that is thus composed can be easily used both outside and in a closed environment, such as for example a pavilion of an exhibition.

Further variations on and/or additions to what has been disclosed above and/or what has been shown in the attached drawings are also possible.

## Claims

1. Cooking system (1) for cooking food preparations, comprising a roasting apparatus (2) and **characterised in that** said roasting apparatus (2) comprises:
- A movable member (3), comprising a hinged portion (5) and a cooking portion (6), said cooking portion (6) being so shaped as to surround said hinged portion (5);
- A supporting member (4), arranged for supporting said movable member (3) and enabling said movable member (3) to rotate in relation to said supporting member (4).

2. Cooking system (1) according to claim 1, wherein said cooking portion (6) comprises a heat producing zone (6a) arranged for housing heat producing means, said heat producing means being arranged for generating a heat that is suitable for cooking said food preparations.

3. Cooking system (1) according to claim 2, wherein said heat producing zone (6a) is so shaped as to support said food preparations during cooking.

4. Cooking system (1) according to any preceding claim, wherein said supporting member (4) comprises a seat (16), said seat (16) being arranged for receiving a pivot portion (15) of said movable member (3).

5. Cooking system (1) according to claim 4, wherein said pivot portion (15) is made near said hinged portion (5).

6. Cooking system (1) according to claim 5, wherein said seat (16) and said pivot portion (15) are arranged along a longitudinal axis (X) of said roasting apparatus (2).

7. Cooking system (1) according to any preceding claim, wherein said movable member (3) is provided with controlling means (7), said controlling means (7) being arranged for moving said movable member (3) in relation to said supporting member (4) in a controlled manner.

8. Cooking system (1) according to claim 7, wherein said controlling means (7) comprises a plurality of shafts (8) fixed to said movable member (3).

9. Cooking system (1) according to any one of claims 6 to 8, wherein, when said pivot portion (15) is received in said seat (16), said movable member (3) can rotate around said longitudinal axis (X) in relation to said supporting member (4) according to one or the other of two opposite directions (F1, F2).

10. Cooking system (1) according to any preceding claim, wherein said movable member (3) comprises a resting face (3b) and said supporting member (4) comprises an operating face (4a), said resting face (3b) facing, in use, said operating face (4a).

11. Cooking system (1) according to claim 10, wherein said resting face (3b) is provided with moving means (13), arranged for enabling said movable member (3) to be moved on said operating face (4a) of said supporting member (4).

12. Cooking system (1) according to claim 11, wherein said moving means (13) comprises a plurality of wheels (13a).

13. Cooking system (1) according to claim 2, or according to any one of claims 3 to 12 as appended to claim 2, wherein said heat producing zone (6a) is defined overall by a side face (3c) of said movable member (3), by a separating wall (9), interposed between said cooking portion (6) and said hinged portion (5), and by a bottom (10), wherein said separating wall (9) is parallel to said side face (3c), whilst said bottom (10) is arranged transversely to said side face (3c) and to said separating wall (9).

14. Cooking system (1) according to any preceding claim, wherein said cooking portion (6) is ring-shaped and surrounds said hinged portion (5).

15. Cooking system (1) according to any preceding claim, further comprising a supporting element (17; 117) that is usable as a base for said roasting apparatus (2) and/or a covering apparatus (23) usable for protecting said roasting apparatus (2) from sunlight and/or atmospheric agents, said covering apparatus (23) comprising sucking means (33) arranged for sucking and dispersing in ambient air smoke produced during cooking of said food preparations.
